# EUROPEAN PATENT APPLICATION

(11) **EP 2 259 265 A2**
(43) Date of publication of application: **08.12.2010**
(21) Application number: 10164467.2
(22) Date of filing: 31.05.2010
(51) Int. Cl.: G11B 19/20, G11B 19/04, G11B 33/12

(54) **Disk drive data storage systems and methods using backup power source charged by spindle motor**

(30) Priority: 02.06.2009 KR 20090048649; 27.05.2010 US 788382
(71) Applicant: SAMSUNG ELECTRONICS CO., LTD., Suwon-si, Gyeonggi-do (KR)
(72) Inventor: Heo, Keun, Seoul (KR); Hwang, Seong-sik, Seoul (KR); Kim, Byung-wook, Gyeonggi-do (KR); Ryu, In-sik, Gyeonggi-do (KR)
(74) Representative: Grünecker, Kinkeldey, Stockmair & Schwanhäusser Anwaltssozietät

(57) **Abstract**

A data storage system includes data storage including at least one data storage disk driven by a spindle motor and a control circuit coupled to the data storage and configured to be coupled to a main power source and a backup power source. The control circuit is configured to detect failure of the main power source, to responsively write data to the data storage while powered by the backup power source, and to subsequently recharge the backup power source using the spindle motor. The control circuit may be configured to further write data to the data storage using the recharged backup power source. The data storage system may further include a head configured to read and/or write data to or from the at least one data storage disk, and the control circuit may be configured to park the head using the recharged backup power source.

## Description

### CROSS-REFERENCE TO RELATED APPLICATIONS

This application claims the benefit of Korean Patent Application No. 2009-0048649, filed on June 2, 2009, in the Korean Intellectual Property Office, the disclosure of which is incorporated herein by reference in its entirety.

### BACKGROUND

The present invention relates to data storage system and methods of operation thereof and, more particularly, to data storage systems with disk drives and methods of operation thereof.

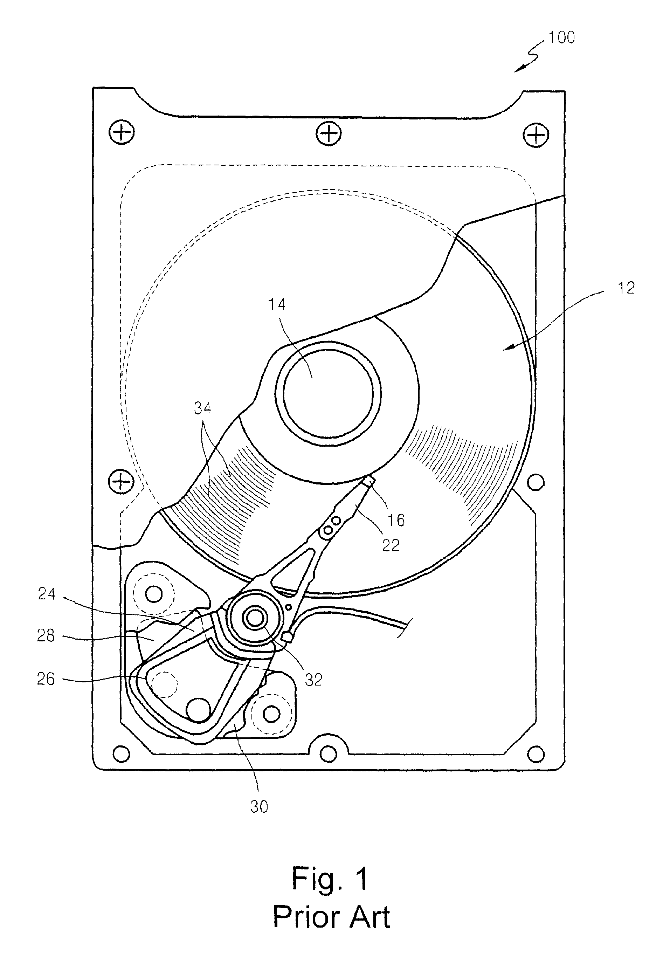

A hard disk drive (HDD) is generally implemented by combining various electrical circuit(s) and a head disk assembly (HDA). FIG. 1 illustrates mechanical components of a HDA 100 in an HDD. Referring to FIG. 1, the HDA 100 includes at least one magnetic disk 12 rotated by a spindle motor 14.

The HAD 100 further includes one or more transducers (not shown) configured to be moveably disposed near a surface of the disk 12. The one or more transducers may detect a magnetic field of the disk 12 and may magnetize the disk 12, thereby enabling the recording and reproduction of information. The one or more transducers may include a write transducer (also referred to as a "writer") configured to magnetize the disk 12, and a read transducer (also referred to as a "reader") configured tor detect the magnetic field of the disk 12. The read transducer may include, for example, a magnetoresistive (MR) element.

The one or more transducers may be integrated into a magnetic head 16 as shown in FIG. 1. The magnetic head 16 is configured to generate an air bearing between the one or more transducers and the surface of the disk 12. As illustrated in FIG. 1, the magnetic head 16 may be integrated into a head stack assembly (HSA) 22, which is attached to an actuator arm 24. The actuator arm 24 may include a voice coil 26, which is disposed near a magnet assembly 28, together forming a voice coil motor (VCM) 30. A current supplied to the voice coil 26 generates a torque that rotates the actuator arm 24 around a bearing assembly 32. The rotation of the actuator arm 24 enables the transducer to traverse the surface of the disk 12.

Information may be stored in a plurality of concentric tracks 34 of the disk 12. The transducer traverses the surface of the disk 12 so as to read or write information in the tracks 34. Each of the tracks 34 may include a plurality of sectors, each of which may include a data field and a servo field. The servo field may include a preamble, a servo address/index mark (SAM/SIM), a gray code, and a burst signal.

### SUMMARY

Some embodiments of the present invention provide data storage systems including data storage including at least one data storage disk driven by a spindle motor and a control circuit coupled to the data storage and configured to be coupled to a main power source and a backup power source. The control circuit is configured to detect failure of the main power source, to responsively write data to the data storage while powered by the backup power source, and to subsequently recharge the backup power source using the spindle motor. The control circuit may be configured to further write data to the data storage using the recharged backup power source. The data storage system may further include a head configured to read and/or write data to or from the at least one data storage disk, and the control circuit may be configured to park the head using the recharged backup power source. The control circuit may be configured to prioritize further writing of data to the data storage using the recharged backup power source over parking of the head using the recharged backup power source.

In some embodiments, the control circuit may be configured to commence recharging of the backup power source using the spindle motor responsive to detecting completion of a write operation and/or detecting a voltage of the backup power source meeting a predetermined criterion. The control circuit may also be configured to charge the backup power source from the main power source.

In further embodiments, the data storage may further include at least one auxiliary data storage device. The control circuit may be configured to prioritize writing of data to the at least one auxiliary data storage device and the at least one data storage disk in response to the detected failure of the main power source. The at least one auxiliary data storage device may include a nonvolatile solid state storage device.

According to some embodiments, the control circuit includes a disk drive controller circuit having a power source input and configured to control the at least one data storage disk and a power supply control circuit configured to selectively apply the main power source and the backup power source to the power source input of the disk drive controller circuit responsive to a control signal generated by the disk drive controller circuit.

In some embodiments, the data storage system may include a head configured to read and/or write data to or from the at least one data storage disk. The system may further include a voice coil motor configured to move the head, a voice coil motor drive circuit configured to drive the voice coil motor, a spindle motor drive circuit configured to drive the spindle motor and a transducer signal processing circuit electrically coupled to the head. The disk drive controller circuit may be configured to control the voice coil motor drive circuit, the spindle motor drive circuit and the transducer signal processing circuit.

Further embodiments provide methods of operating data storage systems including data storage including at least one data storage disk driven by a spindle motor. The data storage is powered from the main power source. Responsive to detecting a failure of a main power source, data is written to the data storage while powered by a backup power source. The backup power source is subsequently recharged using the spindle motor. Additional data may be written to the data storage using the recharged backup power source. The data storage system may further include a head configured to read and/or write data to or from the at least one data storage disk, and the methods may further include parking the head using the recharged backup power source.

In further embodiments, the methods include prioritizing further writing of data to the data storage using the recharged backup power source over parking of the head using the recharged backup power source. Subsequently recharging the backup power source using the spindle motor may include commencing recharging of the backup power source using the spindle motor responsive to detecting completion of a write operation and/or detecting a voltage of the backup power source meeting a predetermined criterion. The backup power source maybe charged from the main power source prior to detecting the failure of the main power source.

The data storage may further include at least one auxiliary data storage device, and the methods may further include prioritizing writing of data to the at least one auxiliary data storage device and the at least one data storage disk in response to the detected failure of the main power source. The at least one auxiliary data storage device may include a solid state nonvolatile data storage device.

Additional embodiments provide apparatus for controlling data storage including at least one data storage disk driven by a spindle motor. The apparatus includes a main power source input configured to be coupled to a main power source and a data storage interface configured to be coupled to the data storage. The apparatus further includes a control circuit coupled to the main power source input and the data storage interface circuit and configured to detect failure of the main power source, to responsively write data to the data storage while powered by a backup power source, and to subsequently recharge the backup power source using the spindle motor.

### BRIEF DESCRIPTION OF THE DRAWINGS

Exemplary embodiments of the present invention will be more clearly understood from the following detailed description taken in conjunction with the accompanying drawings in which:

FIG. 1 is a cutaway illustration of a conventional disk drive;

FIG. 2 is schematic diagram illustrating a data storage system according to some embodiments of the present invention;

FIG. 3 is schematic diagram illustrating a data storage system according to further embodiments of the present invention;

FIG. 4 is schematic diagram illustrating a data storage system according to additional embodiments of the present invention;

FIG. 5 is schematic diagram illustrating a backup power source circuit according to additional embodiments of the present invention; and

FIG. 6 is a flowchart illustrating operations of a data storage system according to some embodiments of the present invention.

### DETAILED DESCRIPTION OF EMBODIMENTS

Some embodiments of the present invention will now be described more fully hereinafter with reference to the accompanying drawings, in which preferred embodiments of the invention are shown. This invention, however, may be embodied in many different forms and should not be construed as limited to the embodiments set forth herein. Rather, these embodiments are provided so that this disclosure will be thorough and complete, and will fully convey the scope of the invention to those skilled in the art. In the drawings, the thicknesses of layers and regions are exaggerated for clarity. Like numbers refer to like elements throughout.hereinafter with reference to the accompanying drawings, in which embodiments of the invention are shown. This invention may, however, be embodied in many different forms and should not be construed as limited to the embodiments set forth herein. Rather, these embodiments are provided so that this disclosure will be thorough and complete, and will fully convey the scope of the invention to those skilled in the art. Like numbers refer to like items throughout.

It will be understood that when an item is referred to as being ""connected"" or ""coupled"" to another item, it can be directly connected or coupled to the other item or intervening items may be present. In contrast, when an item is referred to as being ""directly connected"" or ""directly coupled"" to another item, there are no intervening items present. As used herein, the term ""and/or"" includes any and all combinations of one or more of the associated listed items and may be abbreviated as ""/"".

It will be understood that, although the terms first, second, etc. may be used herein to describe various items, these items should not be limited by these terms. These terms are only used to distinguish one item from another. For example, a "first" item could be termed a "second" item, and, similarly, a "second" item could be termed a "first" item without departing from the teachings of the disclosure.

The terminology used herein is for the purpose of describing particular embodiments only and is not intended to be limiting of the invention. As used herein, the singular forms ""a"", ""an"" and ""the "" are intended to include the plural forms as well, unless the context clearly indicates otherwise. It will be further understood that the terms ""comprises"" and/or ""comprising,"" or ""includes"" and/or ""including"" when used in this specification, specify the presence of stated items or operations but do not preclude the presence or addition of one or more other items or operations.

Unless otherwise defined, all terms (including technical and scientific terms) used herein have the same meaning as commonly understood by one of ordinary skill in the art to which this invention belongs. It will be further understood that terms, such as those defined in commonly used dictionaries, should be interpreted as having a meaning that is consistent with their meaning in the context of the relevant art and/or the present application, and will not be interpreted in an idealized or overly formal sense unless expressly so defined herein.

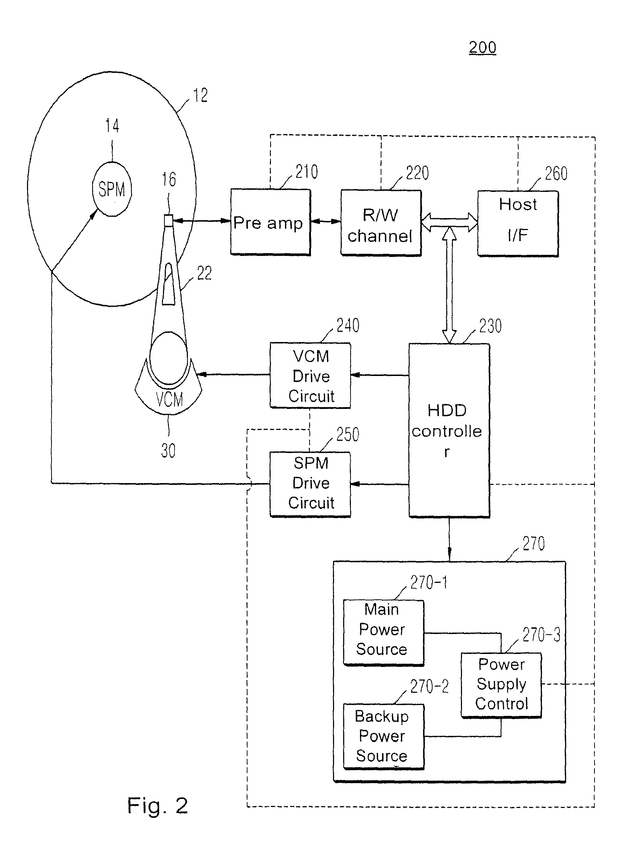

FIG. 2 illustrates a data storage system 200 according to some embodiments of the present invention. The data storage system 200 includes a pre-amp circuit 210, a read/write (R/W) channel circuit 220, an HDD controller circuit 230, a voice coil motor (VCM) drive circuit 240 and a spindle motor (SPM) drive circuit 250. The HDD controller circuit 230 may be, for example, a digital signal processor (DSP), a microprocessor, a microcontroller, or the like. The HDD controller circuit 230 receives commands from a host (not shown) via a host interface circuit 260, and controls the R/W channel circuit 220 so as to read information from a disk 12 or write information to the disk 12. The HDD controller circuit 230 may include a memory configured to store firmware and data for control of the data storage system 200.

The HDD controller circuit 230 is coupled to the VCM drive unit 240, which controls a drive current applied to a VCM 30. The HDD controller circuit 230 applies a control signal to the VCM drive circuit 240 to control movement of a transducer head 16. The HDD controller circuit 230 is also connected to the SPM drive circuit 250, which controls a drive current of a SPM 14. The HDD controller circuit 230 applies a control signal to the SPM drive circuit 250 to control rotation of the SPM 14.

As further shown, the HDD controller circuit 230 is coupled to a power supply 270. As shown, the power supply 270 includes a main power source 270-1, a backup power source 270-2 and a power supply control circuit 270-3. The main power source 270-1 may be, for example, an AC or DC source, such as a battery. The main power source 270-1 may include an energy generation and/or storage device and/or a bus or other conductor coupled to such a device. Similarly, the backup power source 270-2 may include an energy generation and/or storage device and/or a bus or other conductor coupled to such a device. For example, the backup power source 270-2 may include a capacitor, battery or other charge storage device, or a bus or conductor coupled thereto.

Under normal operating conditions, the main power source 270-1 supplies power to the pre-amp circuit 210, the R/W channel circuit 220, the HDD controller circuit 230, the VCM drive circuit 240 and the SPM drive circuit 250. When the main power source 270-1 fails, the backup power source 270-2 provides power via the power supply control circuit 270-3 to perform certain post-outage operations. As explained in detail below, these post-outage operations may include, but are not limited to, read operations, write operations and disk parking operations. The power supply control circuit 270-3 controls power distribution based on a control signal applied by the HDD controller circuit 230.

Still referring to FIG. 2, in a data read mode, an electric signal generated by the head 16 is amplified by the pre-amplifier circuit 210. The R/W channel circuit 220 processes the amplified output signal produced by the pre-amplifier circuit 210 using an automatic gain control (AGC) circuit that automatically varies a gain provided by the R/W channel circuit 220 according to signal magnitude, converts the signal into a digital signal and then performs a decoding process on the digital signal. The HDD controller circuit 230 performs an error correction process on the decoded digital signal produced by the R/W channel circuit 220 using, for example, a Reed-Solomon code, and produces an error-corrected data stream that is transmitted to a host (not shown) via the host interface circuit 260.

In a data write mode, the HDD controller circuit 230 receives data from the host via the host interface circuit 260, adds a parity symbol for error correction and passes the received data and parity data to the R/W channel circuit 220. The R/W channel circuit 220 encodes the data, and the encoded data is recorded to the disk 12 via the magnetic head 16 using a recording current generated by the pre-amplifier circuit 210.

As noted above, during normal conditions, power is supplied to the components of the data storage system 200 from the main power source 270-1. Under these conditions, the power supply control circuit 270-3 may also supply power from the main power source 270-1 to the backup power source 270-2 to charge the backup power source 270-2.

In the event of a sudden power outage, the HDD controller circuit 230 may cause the power supply control unit 270-3 to start supplying power from the backup power source 270-2. Such a sudden power off condition may be detected, for example, by monitoring the power supply voltage and comparing it to a threshold level to determine when a power outage has occurred.

According to some embodiments, a currently executing read or write operation may be prioritized such that, when a sudden power off occurs, power from the backup power source 270-2 is used to first finish the currently executing read or write operation before performing other operations, such as head parking. The backup power is supplied to the HDD controller circuit 230, the R/W channel circuit 220 and/or the preamplifier circuit 210 as necessary.

After the current read or write operation is finished, the HDD controller circuit 230 may cause the power supply control circuit 270-3 to begin recharging the backup power source 270-2 using back EMF (electro motive force) from the SPM 14. Power from the recharged backup power source 270-2 may then be used to conduct further read and/or write operation and/or to power the VCM drive circuit 240 to cause the VCM 30 to park the head 16.

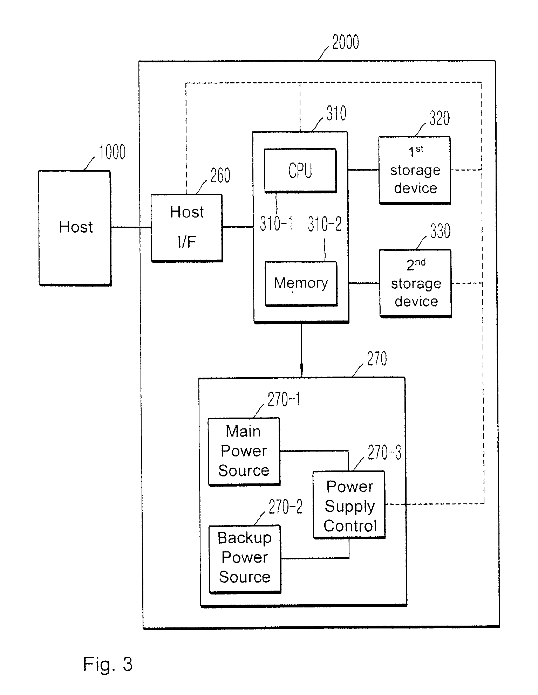

FIG. 3 illustrates a data storage system 2000 according to further embodiments of the present invention. The data storage system 2000 is configured to be coupled to a host 1000, and includes first and second storage devices 320, 330. The data storage system 2000 also includes a host interface circuit 260 and a system controller circuit 310. The system 2000 further includes a power supply system 270 including a main power source 270-1, a backup power source 270-2 and a power supply control circuit 270-3.

The system controller circuit 310 includes a central processing unit (CPU) 310-1 and a memory 310-2. The CPU 310-1 is configured to control components of the data storage system 2000, including the storage devices 320, 330, the host interface circuit 260 and the power supply 270. The memory 310-2 is configured to store a control program and data.

The first and second storage devices 320, 330 may be non-volatile storage devices that use different storage media. For example, the first storage device 320 may be a magnetic storage device, such as an HDD, and the second storage device 330 may be a solid state non-volatile memory device, such as a solid state drive (SSD) including, for example, flash memory, phase change random access memory (PRAM), ferroelectric random access memory (FRAM) and/or magnetic random access memory (MRAM).

The host interface circuit 260 may support data exchange with the host 1000 according to, for example, an Integrated Drive Electronics (IDE) interface specification or other protocol. In some embodiments, a single host interface is used for data transfer between the host 1000 and the first and second storage devices 320, 330. The system controller circuit 310 may control access to the multiple storage devices such that they are viewed by the host as a single storage device, or the system controller circuit 310 may treat the devices as separate. The main power source 270-1, the backup power source 270-2 and the power supply control circuit 270-3 operate responsive to a control signal applied by the system controller circuit 310.

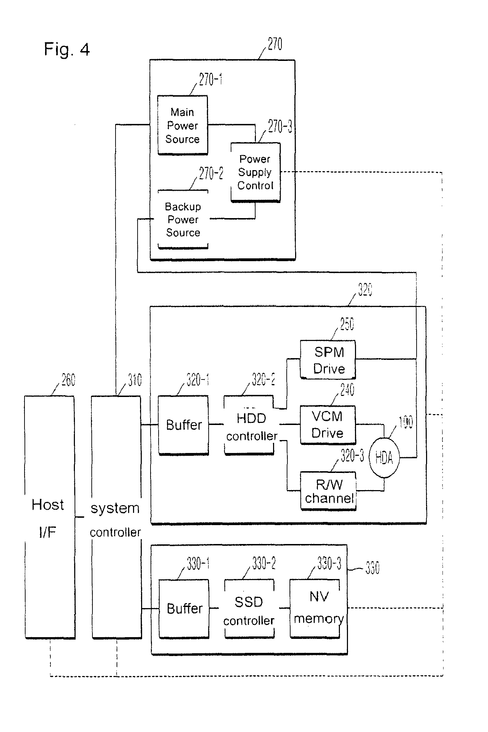

FIG. 4 illustrates components of the first and second storage devices 320, 330. The first storage device 320 includes a buffer circuit 320-1, an HDD controller circuit 320-2, a R/W circuit 320-3, a VCM driver circuit 240, an SPM driver circuit 250 and a head stack assembly (HAD) 100. The second storage device 330 includes a buffer circuit 330-1, an SSD controller circuit 330-2 and a non-volatile (NV) memory circuit 330-3.

In a data read mode, a read command is received via the host interface circuit 260. The system controller circuit 310 checks logical block address (LBA) information in the received read command and, if the received LBA is assigned to the HDD 320, the system controller circuit 310 selects the HDD 320 for reading. The HDD controller circuit 320-2 calculates cylinder-head-sector (CHS) information corresponding to the received LBA and responsively controls the VCM drive circuit 240 to move the head of the HAD 100 to the target track. When the head arrives at the target track, the head is used to read the disk, producing a signal that is amplified and converted to a digital stream by the R/W circuit 320-3. The digital stream is provided to the buffer circuit 320-1. The system controller circuit 310 reads data stored in the buffer circuit 320-1 and transmits it to a host via the host interface circuit 260.

If the received LBA is assigned to the SSD 330, the system controller circuit 310 selects the SSD 330 for a read operation. The SSD controller circuit 330-2 calculates a physical block number (PBN) corresponding to the received LBA, reads data from the memory block associated with the PBN and stores the data in the buffer circuit 330-1. The system controller circuit 310 reads the data stored in the buffer circuit 330-1 and provides it to the host via the host interface circuit 260.

In a data write mode, the system controller circuit 310 receives a write command from the host via the host interface circuit 260, and the system controller circuit 310 checks which of the storage devices 320, 330 corresponds to the received LBA. If the LBA corresponds to the HDD 320, the system controller circuit 310 selects the HDD 320 for a write operation.

HDD controller circuit 320-2 calculates CHS information corresponding to the received LBA and controls the VCM drive circuit 240 to move the head of the HDA 100 to the target track. Data received from the host via the host interface 260 is temporarily stored in the buffer circuit 320-1, and the HDD controller circuit 320-2 reads the data from the buffer circuit 320-1 and sends it to the R/W circuit 320-3. The R/W circuit 320-1 translates the data signal to a write channel optimized binary data stream and converts the data stream to a write signal for recording on the disk via the magnetic head of the HDA 100.

If the received LBA is assigned to the SSD 330, the system controller circuit 310 selects the SSD 330 for a write operation. The SSD controller circuit 330-2 calculates the PBN corresponding to the received LBA. Data received from the host via the host interface circuit 260 is temporarily stored in the buffer 330-1, from which it is read by the SSD controller circuit 330-2 and written to the area of the NV memory 330-3 corresponding to the PBN.

Under normal operating conditions, the power supply control circuit 270-3 supplies power to components of the data storage system from the main power source 270-1. The backup power source 270-2 may be charged from the main power source 270-1. In the event of a failure of the main power source 270-1, the system controller circuit 310 may cause the power supply control circuit 270-3 to start supplying power from the backup power source 270-2. If a read or write operation to the HDD 320 is occurring at the time of power supply failure, power may be supplied to the HDD 320 and associated components to complete the current read or write operation. After the current read or write operation is completed, the system controller circuit may cause the power supply control circuit 270-3 to charge the backup power source 270-2 using back EMF of the spindle motor 14. Subsequently, the HDD controller circuit 320-2 may park the head of the HDA 100 using power from the backup power source 270-2. Similarly, if power loss occurs when a read or write operation is being conducted for the SSD 330, the system controller circuit 310 may direct power from the backup power source 270-2 for completing the current read or write operation to the SSD 330.

If power failure occurs when operations on both the HDD 320 and the SSD 330 are simultaneously occurring, the system controller circuit 310 may cause the power supply control circuit 270-3 to supply backup power to the SSD 330 and store metadata for the HDD 320 in the NV memory 330-3. The system controller circuit 310 may then recharge the backup power source 270-2 using back EMF from the spindle motor of the HDA 100, followed by parking the head of the HDA 100 using the recharged backup power source 270-2.

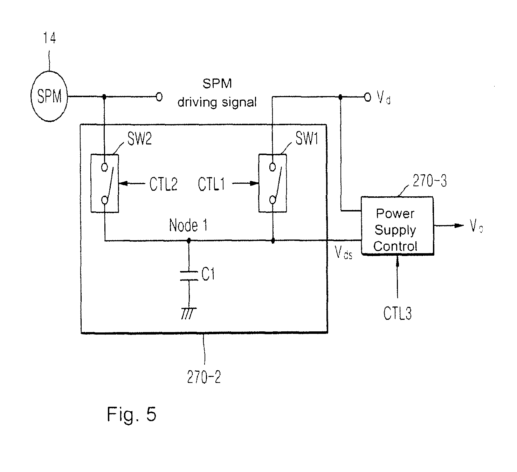

FIG. 5 illustrates an implementation of a backup power source 270-2 according to some embodiments. The backup power source 27-2 includes first and second switches SW1, SW2 and a capacitor C1. The capacitor C1 is coupled between a node 1 and ground. A first one of the switches SW 1 is configured to couple and decouple a power supply node Vd and the node 1, and the second switch SW2 is configured to couple and decouple the SPM 14 and the node 1. A first input node of a power supply control circuit 270-3 is coupled to the power supply node Vd and a second input node of the power supply control circuit 270-3 is coupled to the node 1. Control signals CTL1, CTL2 applied to the first and second switches SW1, SW2 may be generated by a control circuit such as the HDD controller circuit 230 of FIG. 2 or the system controller circuit 310 of FIG. 3.

Under normal conditions, the first switch SW1 is turned on and the second switch SW2 is turned off, and the capacitor C1 is charged by power from the power supply node Vd. When the voltage Vds of the capacitor C1 is approximately equal to voltage of the power supply node Vd, the control signal CTL1 may turn off the first switch SW1. If main power is lost while the first switch SW1 is still on, the first switch SW1 may be turned off by the first control signal CTL 1.

The power supply control circuit 270-3 is controlled by a third control signal CTL3. Under normal conditions, the output Vo of the power supply control circuit 270-3 is generated from the power supply node Vd. When the main power is lost, the first switch SW1 is turned off and the power supply control circuit 270-3 generates the output Vo from the energy stored in the capacitor C1. After supplying power to complete a pending read and/or write operation as described above, the second control signal CTL2 may be activated to close the second switch SW2. This allows the discharged capacitor C1 to recharge using back EMF from the SPM 14. As described above, the recharged capacitor C1 can then be used for additional reading and/or writing and/or for parking the disk head. The transition from supplying power from the backup power source 270-2 to recharging using the SPM 14 can be controlled based on a number of different criteria. For example, recharging using the back EMF of the SPM 14 may commence upon completion of a pending read or write operation. In further embodiments, the transition may occur responsive to the voltage Vd of the node 1 falling below a predetermined threshold, regardless of whether a current read or write operation has been completed.

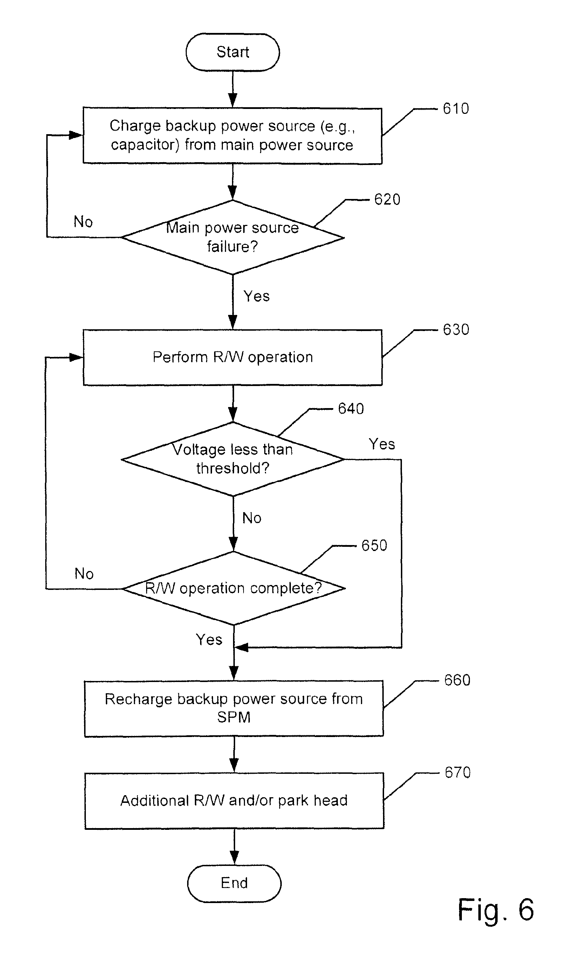

FIG. 6 illustrates operations of a data storage system according to some embodiments of the present invention. During normal power conditions, the backup power source is charged from the main power source (block 610). Upon detection of a power off event (block 620), a pending read or write operation may be completed using the backup power source (block 630). If a voltage of the backup power remains above a predetermined threshold, the backup power source may be used until the current operation is completed (blocks 640, 650). If the current operation is complete or the backup power source voltage falls below the threshold, the backup power source may be recharged using the spindle motor back EMF (blocks 640, 650, 660). After recharging, the backup power source may then be used for further read or write operations and/or to park the hard disk drive head (block 670). According to some embodiments, read and/or write operations may be prioritized over head parking, or vice versa. For example, a write operation for critical or sensitive data may be prioritized over head parking.

While the present invention has been particularly shown and described with reference to exemplary embodiments thereof, it will be understood that various changes in form and details may be made therein without departing from the spirit and scope of the following claims.
**The following is a list of further preferred embodiments of the invention:**
Embodiment 1: A data storage system comprising:
   data storage comprising at least one data storage disk driven by a spindle motor; and
   a control circuit coupled to the data storage and configured to be coupled to a main power source and a backup power source, the control circuit configured to detect failure of the main power source, to responsively write data to the data storage while powered by the backup power source, and to subsequently recharge the backup power source using the spindle motor.
Embodiment 2: The system of Embodiment 1, wherein the control circuit is configured to further write data to the data storage using the recharged backup power source.
Embodiment 3: The system of Embodiment 1, further comprising a head configured to read and/or write data to or from the at least one data storage disk, and wherein the control circuit is configured to park the head using the recharged backup power source.
Embodiment 4: The system of Embodiment 3, wherein the control circuit is configured to prioritize further writing of data to the data storage using the recharged backup power source over parking of the head using the recharged backup power source.
Embodiment 5: The system of Embodiment 1, wherein the control circuit is configured to commence recharging of the backup power source using the spindle motor responsive to detecting completion of a write operation and/or detecting a voltage of the backup power source meeting a predetermined criterion.
Embodiment 6: The system of Embodiment 1, wherein the control circuit is configured to charge the backup power source from the main power source.
Embodiment 7: The system of Embodiment 1, wherein the data storage further comprises at least one auxiliary data storage device.
Embodiment 8: The system of Embodiment 7, wherein the control circuit is configured to prioritize writing of data to the at least one auxiliary data storage device and the at least one data storage disk in response to the detected failure of the main power source.
Embodiment 9: The system of Embodiment 7, wherein the at least one auxiliary data storage device comprises a nonvolatile solid state storage device.
Embodiment 10: The system of Embodiment 1, wherein the control circuit comprises:
   a disk drive controller circuit having a power source input and configured to control the at least one data storage disk; and
   a power supply control circuit configured to selectively apply the main power source and the backup power source to the power source input of the disk drive controller circuit responsive to a control signal generated by the disk drive controller circuit.
Embodiment 11: The system of Embodiment 10, further comprising the backup power source coupled to the power supply control circuit.
Embodiment 12: The system of Embodiment 11, wherein the backup power source comprises a capacitor.
Embodiment 13: The system of Embodiment 10, further comprising:
   a head configured to read and/or write data to or from the at least one data storage disk;
   a voice coil motor configured to actuate the head;
   a voice coil motor drive circuit configured to drive the voice coil motor;
   a spindle motor drive circuit configured to drive the spindle motor; and
   a transducer signal processing circuit electrically coupled to the transducer head; and
   wherein the disk drive controller circuit is configured to control the voice coil motor drive circuit, the spindle motor drive circuit and the transducer signal processing circuit.
Embodiment 14: A method of operating a data storage system comprising data storage including at least one data storage disk driven by a spindle motor, the method comprising:
   operating the data storage from the main power source;
   detecting a failure of a main power source;
   in response to the detected failure, writing data to the data storage while powered by a backup power source; and
   subsequently recharging the backup power source using the spindle motor.
Embodiment 15: The method of Embodiment 14, further comprising writing additional data to the data storage using the recharged backup power source.
Embodiment 16: The method of Embodiment 14, wherein the data storage system further comprises a head configured to read and/or write data to or from the at least one data storage disk, and wherein the method further comprises parking the head using the recharged backup power source.
Embodiment 17: The method of Embodiment 16, further comprising prioritizing further writing of data to the data storage using the recharged backup power source over parking of the head using the recharged backup power source.
Embodiment 18: The method of Embodiment 14, wherein subsequently recharging the backup power source using the spindle motor comprises commencing recharging of the backup power source using the spindle motor responsive to detecting completion of a write operation and/or detecting a voltage of the backup power source meeting a predetermined criterion.
Embodiment 19: The method of Embodiment 14, further comprising charging the backup power source from the main power source prior to detecting the failure of the main power source.
Embodiment 20: The method of Embodiment 14, wherein the data storage further comprises at least one auxiliary data storage device, and further comprising prioritizing writing of data to the at least one auxiliary data storage device and the at least one data storage disk in response to the detected failure of the main power source.
Embodiment 21: The method of Embodiment 20, wherein the at least one auxiliary data storage device comprises a solid state nonvolatile data storage device.
Embodiment 22: The method of Embodiment 14, wherein the backup power source comprises a capacitor.
Embodiment 23: An apparatus for controlling data storage comprising at least one data storage disk driven by a spindle motor, the system comprising:
   a main power source input configured to be coupled to a main power source;
   a data storage interface configured to be coupled to the data storage;
   a control circuit coupled to the main power source input and the data storage interface and configured to detect failure of the main power source, to responsively write data to the data storage while powered by a backup power source, and to subsequently recharge the backup power source using the spindle motor.
Embodiment 24: The apparatus of Embodiment 23, wherein the control circuit comprises:
   a disk drive controller circuit having a power source input and configured to control the at least one data storage disk; and
   a power supply control circuit configured to selectively apply the main power source and the backup power source to the power source input of the disk drive controller circuit responsive to a control signal generated by the disk drive controller circuit.
Embodiment 25: The apparatus of Embodiment 24, further comprising the backup power source coupled to the power supply control circuit.
Embodiment 26: The apparatus of Embodiment 25, wherein the backup power source comprises a capacitor.
Embodiment 27: The apparatus of Embodiment 23, wherein the control circuit is configured to further write data to the data storage using the recharged backup power source.
Embodiment 28: The system of Embodiment 27, wherein the control circuit is configured to prioritize further writing of data to the data storage using the recharged backup power source over parking of the head using the recharged backup power source.
Embodiment 29: The apparatus of Embodiment 23, further comprising a head configured to read and/or write data to or from the at least one data storage disk, and wherein the control circuit is configured to park the head using the recharged backup power source.
Embodiment 30: The apparatus of Embodiment 23, wherein the control circuit is configured to commence recharging of the backup power source using the spindle motor responsive to detecting completion of a write operation and/or detecting a voltage of the backup power source meeting a predetermined criterion.
Embodiment 31: The apparatus of Embodiment 23, wherein the control circuit is configured to charge the backup power source from the main power source.
Embodiment 32: The apparatus of Embodiment 23, wherein the data storage further comprises at least one auxiliary data storage device, and wherein the control circuit is configured to prioritize writing of data to the at least one auxiliary data storage device and the at least one data storage disk in response to the detected failure of the main power source.
Embodiment 33: The method of Embodiment 32, wherein the at least one auxiliary data storage device comprises a solid state non-volatile data storage device.

## Claims

1. A data storage system comprising:
data storage comprising at least one data storage disk driven by a spindle motor; and
a control circuit coupled to the data storage and configured to be coupled to a main power source and a backup power source, the control circuit configured to detect failure of the main power source, to responsively write data to the data storage while powered by the backup power source, and to subsequently recharge the backup power source using the spindle motor.

2. The system of Claim 1, wherein the control circuit is configured to further write data to the data storage using the recharged backup power source.

3. The system according to any one of Claims 1 or 2, further comprising a head configured to read and/or write data to or from the at least one data storage disk, and wherein the control circuit is configured to park the head using the recharged backup power source.

4. The system according to any one of Claims 1 to 3, wherein the control circuit is configured to commence recharging of the backup power source using the spindle motor responsive to detecting completion of a write operation and/or detecting a voltage of the backup power source meeting a predetermined criterion.

5. The system according to any one of Claims 1 to 4, wherein the control circuit comprises:
a disk drive controller circuit having a power source input and configured to control the at least one data storage disk; and
a power supply control circuit configured to selectively apply the main power source and the backup power source to the power source input of the disk drive controller circuit responsive to a control signal generated by the disk drive controller circuit.

6. The system of Claim 5, further comprising:
a head configured to read and/or write data to or from the at least one data storage disk;
a voice coil motor configured to actuate the head;
a voice coil motor drive circuit configured to drive the voice coil motor;
a spindle motor drive circuit configured to drive the spindle motor; and
a transducer signal processing circuit electrically coupled to the transducer head; and
wherein the disk drive controller circuit is configured to control the voice coil motor drive circuit, the spindle motor drive circuit and the transducer signal processing circuit.

7. A method of operating a data storage system comprising data storage including at least one data storage disk driven by a spindle motor, the method comprising:
operating the data storage from the main power source;
detecting a failure of a main power source;
in response to the detected failure, writing data to the data storage while powered by a backup power source; and
subsequently recharging the backup power source using the spindle motor.

8. The method of Claim 7, further comprising writing additional data to the data storage using the recharged backup power source.

9. The method according to any one of Claims 7 or 8, wherein the data storage system further comprises a head configured to read and/or write data to or from the at least one data storage disk, and wherein the method further comprises parking the head using the recharged backup power source.

10. The method according to any one of Claims 7 to 9, wherein subsequently recharging the backup power source using the spindle motor comprises commencing recharging of the backup power source using the spindle motor responsive to detecting completion of a write operation and/or detecting a voltage of the backup power source meeting a predetermined criterion.

11. The method according to any one of Claim 7 to 9, wherein the data storage further comprises at least one auxiliary data storage device, and further comprising prioritizing writing of data to the at least one auxiliary data storage device and the at least one data storage disk in response to the detected failure of the main power source.

12. An apparatus for controlling data storage comprising at least one data storage disk driven by a spindle motor, the system comprising:
a main power source input configured to be coupled to a main power source;
a data storage interface configured to be coupled to the data storage;
a control circuit coupled to the main power source input and the data storage interface and configured to detect failure of the main power source, to responsively write data to the data storage while powered by a backup power source, and to subsequently recharge the backup power source using the spindle motor.

13. The apparatus of Claim 12, wherein the control circuit comprises:
a disk drive controller circuit having a power source input and configured to control the at least one data storage disk; and
a power supply control circuit configured to selectively apply the main power source and the backup power source to the power source input of the disk drive controller circuit responsive to a control signal generated by the disk drive controller circuit.

14. The apparatus of Claim 13, further comprising the backup power source coupled to the power supply control circuit.

15. The apparatus according to any one of Claims 12 to 14, wherein the data storage further comprises at least one auxiliary data storage device, and wherein the control circuit is configured to prioritize writing of data to the at least one auxiliary data storage device and the at least one data storage disk in response to the detected failure of the main power source.
